# EUROPÄISCHE PATENTSCHRIFT

(11) **EP 2 766 590 B1**
(45) Veröffentlichungstag und Bekanntmachung des Hinweises auf die Patenterteilung: **03.11.2021**
(21) Anmeldenummer: 12778621.8
(22) Anmeldetag: 09.10.2012
(51) Int. Cl.: F02D 41/14, F16F 15/131

(54) **VERFAHREN ZUM ERKENNEN VON DREHZAHL-/DREHMOMENTSCHWANKUNGEN IN EINER ANTRIEBSVORRICHTUNG**
METHOD FOR DETECTING ROTATIONAL SPEED/TORQUE FLUCTUATIONS IN A DRIVE DEVICE
PROCÉDÉ PERMETTANT DE DÉTECTER DES VARIATIONS DE RÉGIME / DE COUPLE DANS UN DISPOSITIF D'ENTRAÎNEMENT

(30) Priorität: 13.10.2011 DE 102011115927
(43) Veröffentlichungstag der Anmeldung: 20.08.2014
(73) Patentinhaber: Audi AG, 85045 Ingolstadt (DE)
(72) Erfinder: PFEIFFER, Juergen, 85055 Ingolstadt (DE); FELBER, Mathias, 85095 Denkendorf (DE)
(74) Vertreter: Wallinger, Michael
(86) Internationale Anmeldenummer: PCT/EP2012/004224
(87) Internationale Veröffentlichungsnummer: WO 2013/053461

(56) Entgegenhaltungen:
- EP-A1- 0 711 989
- EP-A2- 0 595 505
- EP-A2- 2 230 393
- WO-A1-2010/121888
- DE-A1-102004 041 205
- DE-A1-102009 013 142
- None

## Beschreibung

Die vorliegende Erfindung betrifft ein Verfahren zum Erkennen von Drehzahl-/Drehmomentschwankungen in einer Antriebsvorrichtung, insbesondere in einem Kraftfahrzeug, wobei diese Antriebsvorrichtung wenigstens eine Verbrennungskraftmaschine und wenigstens eine Drehschwingungs-Beeinflussungs-Einrichtung, insbesondere ein Zweimassenschwungrad aufweist. Das erfindungsgemäße Verfahren wird nachfolgend anhand eines Kraftfahrzeugs mit Verbrennungskraftmaschine erläutert, es wird darauf hingewiesen, dass ein solches Verfahren auch in Hybridfahrzeugen und Fahrzeugen mit Range-Extender zum Einsatz kommen kann.

In der Regel werden in Kraftfahrzeugen Verbrennungskraftmaschinen eingesetzt, welche nach einem diskontinuierlichen Verbrennungsprinzip arbeiten, insbesondere sind dies Zwei-Takt- oder Vier-Takt-Verbrennungskraftmaschinen, welche meist, je nach eingesetztem Kraftstoff, als Otto- oder Dieselmotoren bezeichnet werden. Diesen Verbrennungskraftmaschinen ist es durch ihr Arbeitsprinzip in der Regel gemein, dass ein abgegebenes Drehmoment diskontinuierlich ist und insbesondere bestimmten Schwankungen unterliegt. Solche Schwankungen treten unabhängig von der Kinematik der Verbrennungskraftmaschine auf, insbesondere unabhängig davon, ob eine Verbrennungskraftmaschine in Rotationskolben- oder Hubkolbenbauart vorliegt. Aufgrund dieser Drehmomentschwankungen kommt es regelmäßig zu unerwünschten Drehzahlschwankungen in einem Kraftfahrzeugantriebsstrang. Solche Drehzahlschwankungen stellen in der Regel zusätzliche Beanspruchungen für den Antriebsstrang dar und werden meist von Fahrzeuginsassen als störend empfunden, daher weisen viele Kraftfahrzeuge Einrichtungen zur Beeinflussung dieser Schwankungen auf, insbesondere zu deren Verminderung. Als besonders wirkungsvolle Einrichtung zur Verminderung störender Drehmoment-/Drehzahlschwankungen haben sich in diesem Zusammenhang sogenannten Zweimassenschwungräder erwiesen. Insbesondere Zweimassenschwungräder, aber auch andere Einrichtungen einer Antriebsvorrichtung, weisen regelmäßig ein eigenes Schwingungsverhalten (Eigenfrequenzen) auf. Werden diese Einrichtungen im Bereich ihrer Eigenfrequenzen mit Schwingungen angeregt, so kann dies zu einem ungünstigen Betriebsverhalten führen, hieraus folgt, dass diese Einrichtungen in der Regel zu begünstigende Betriebsbereiche, weniger zu begünstigende Betriebsbereiche bis hin zu, zu vermeidenden Betriebsbereichen aufweisen. Zu vermeidende Betriebsbereiche sind insbesondere solche, innerhalb welcher die entsprechende Einrichtung mit einer ihrer Eigenfrequenzen zum Schwingen angeregt wird (Resonanz). Dabei ist es für den Betriebsbereich dieser Einrichtungen in der Regel von hoher Bedeutung, mit welcher Drehzahl- /Drehmomentschwankung beziehungsweise mit welcher Abfolge von Drehzahl-/Drehmomentschwankungen diese beaufschlagt werden. Um die Drehzahl-/Drehmomentschwankungen bei der Steuerung der Antriebsvorrichtung berücksichtigen zu können, ist es meist bedeutsam, diese zunächst hinreichend exakt zu erfassen.

Aus dem Stand der Technik, siehe z.B. EP 711989 A1, sind Verfahren bekannt, mittels welcher Drehzahl-Drehmomentschwankungen erfasst werden können. Aus der WO2010/121888 ist es bekannt, einen lokalen Maximalwert der Drehzahl zu ermitteln, den Differenzwert zwischen diesem Maximalwert und der aktuellen Drehzahl zu bestimmen und in Abhängigkeit dieses Differenzwertes die Verbrennungskraftmaschine abzustellen.

Die Aufgabe der vorliegenden Erfindungen ist es, ein verbessertes Verfahren zum Erkennen von Drehzahl-/Drehmomentschwankungen im Antriebsstrang, vorzustellen. Zur Lösung dieser Aufgabe wird ein Verfahren nach Anspruch 1 vorgeschlagen, zu bevorzugende Weiterbildungen sind Gegenstand der abhängigen Ansprüche.

Unter einer Antriebsvorrichtung ist im Sinne der Erfindung eine Vorrichtung zum Bereitstellen und Leiten von Antriebsleistung, in der Regel in Form von Drehmoment und Drehzahl, zu verstehen. Vorzugsweise wird eine solche Antriebsvorrichtung in einem Kraftfahrzeug eingesetzt um in einer Antriebsmaschine Leistung zu erzeugen und an eine Rad-Reifekombination zum Antrieb des Fahrzeugs zu übertragen. Die Antriebsvorrichtung weist eine Verbrennungskraftmaschine, eine Drehschwingungs-Beeinflussungs-Einrichtung und weitere Einrichtungen zum Übertragen von Antriebsleistung aus dieser Verbrennungskraftmaschine zu einer oder mehreren Rad-Reifenkombinationen auf. Vorzugsweise sind solche weiteren Einrichtungen Getriebeeinrichtungen, Gelenkwellen, Wellen oder dergleichen.

Unter einer Verbrennungskraftmaschine ist im Sinne der Erfindung eine Einrichtung zu verstehen, in welcher Energie, vorzugsweise in chemisch gebundener Form, in mechanische Leistung umgewandelt wird. Vorzugsweise arbeitet eine Verbrennungskraftmaschine nach einem diskontinuierlichen Verbrennungsprinzip, im Gegensatz zu einem kontinuierlichen Verbrennungsprozess wie ihn Gasturbineneinrichtungen in der Regel aufweisen. Weiter vorzugsweise ist eine Verbrennungskraftmaschine als ein Zwei-Takt-Verbrennungsmotor ausgebildet, bevorzugt als ein Vier-Takt-Verbrennungsmotor.

Vorzugsweise weist diese Verbrennungskraftmaschine wenigstens zwei Betriebsmodi auf. Vorzugsweise ist ein erster Betriebsmodus ein Antriebs-Betriebsmodus. Ein solcher Antriebs-Betriebsmodus ist insbesondere dadurch gekennzeichnet, dass von der Verbrennungskraftmaschine eine Antriebsleistung auf eine Drehschwingungs-Beeinflussungs-Einrichtung übertragen wird. Vorzugsweise ist ein zweiter Betriebsmodus ein Ruhe-Betriebsmodus. Ein solcher Ruhe-Betriebsmodus ist insbesondere dadurch gekennzeichnet, dass von der Verbrennungskraftmaschine keine Antriebsleistung auf eine Drehschwingungs-Beeinflussungs-Einrichtung übertragen wird. Weiter vorzugsweise wird diese Antriebsleistung insbesondere durch eine Abtriebwelle der Verbrennungskraftmaschine übertragen. Weiter vorzugsweise wird eine solche Antriebsleistung insbesondere in Form einer Drehzahl und eines Drehmoments übertragen.

Unter einer Drehschwingungs-Beeinflussungs-Einrichtung ist im Sinne der Erfindung eine Einrichtung zu verstehen, welche dazu vorgesehen ist in einem Antriebsstrang auftretende Drehzahl-/Drehmoment-Schwingungen, insbesondere solche die durch eine dieser Verbrennungskraftmaschinen aufgebracht werden zu beeinflussen, vorzugsweise zu verringern. Vorzugsweise wird die Frequenz einer solchen Schwingung durch diese Drehschwingungs-Beeinflussungs-Einrichtung verändert. Weiter vorzugsweise wird insbesondere die Amplitude einer solchen Schwingung durch eine mittels dieser Drehschwingungs-Beeinflussungs-Einrichtung aufgebrachte, vorzugsweise gegenphasige, Schwingung verringert oder bevorzugt vollständig getilgt. Weiter vorzugsweise wird eine solche Schwingung mittels dieser Drehschwingungs-Beeinflussungs-Einrichtung bedämpft. Vorzugsweise ist unter dem Bedämpfen das Verringern einer Schwingungsamplitude dieser Schwingung, insbesondere durch Energiewandlungsprozesse, zu verstehen. Vorzugsweise wird das Bedämpfen dieser Schwingung durch das Aufbringen von Reibarbeit, vorzugsweise Festkörperreibung oder bevorzugt viskoser Reibung erreicht. Vorzugsweise ist eine Drehschwingungs-Beeinflussungs-Einrichtung als eine Einrichtung aufzufassen, welche ein Eingangselement (erste Masse), ein Ausgangselement (zweite Masse) und eine vorzugsweise elastische Verbindungseinrichtung aufweist. Weiter vorzugsweise ermöglicht diese elastische Verbindungseinrichtung insbesondere eine Drehbeweglichkeit zwischen diesem Eingangselement und diesem Ausgangselement. Weiter vorzugsweise weist diese Verbindungseinrichtung ein Federelement und ein Dämpferelement auf. Bevorzugt ist eine Drehschwingungs-Beeinflussungs-Einrichtung als ein sogenanntes Zweimassenschwungrad ausgeführt, besonders bevorzugt als ein gedämpftes Zweimassenschwungrad. Vorzugsweise ist dieses Eingangselement mit der Abtriebswelle der Verbrennungskraftmaschine gekoppelt und dieses Ausgangselement ist mit einer Getriebeeinrichtung oder der gleichen koppelbar.

Unter dem Erkennen einer kritischen Drehzahlsituation ist im Sinne der Erfindung die Messung der Drehzahl der Abtriebwelle und der Vergleich dieser mit einem Drehzahl-Schwellenwert zu verstehen. Vorzugsweise erfolgt die Messung wiederholt und mit einer bestimmten Abtastfrequenz. Vorzugsweise ist ein Ergebnis dieser Erkennung der zeitliche Verlauf der Drehzahl der Verbrennungskraftmaschine, insbesondere der Verlauf der Drehzahl der Abtriebswelle. Vorzugsweise wird aus den ermittelten diskreten Drehzahlwerten eine mathematische Funktion gebildet, welche den zeitlichen Drehzahlverlauf wenigstens bereichsweise annähert oder beschreibt. Die kritische Drehzahlsituation tritt unterhalb eines Drehzahl-Schwellenwertes auf. Bei Auftreten einer kritischen Drehzahlsituation kann es zu einer Verschlechterung des Fahrkomforts beziehungsweise zu einer Beschädigung der Drehschwingungs-Beeinflussungs-Einrichtung kommen, wobei diese Beschädigung nicht unmittelbar mit Auftreten der kritischen Drehzahlsituation einhergehen muss. Vorzugsweise können die ermittelten Messwerte bezügliche der Drehzahl-/Drehmomentschwankungen, vom Zeitbereich in einen Abbildungsbereich überführt werden, vorzugsweise durch eine Fast-Fourier-Transformation (FFT) weiter vorzugsweise in den Frequenzbereich. Durch eine solche Transformation wird eine erleichterte Analyse dieser Messwerte ermöglicht.

Unter dem Erfassen eines lokalen Drehzahlminimums ist die Bewertung der gemessenen Drehzahl dieser Abtriebwelle zu verstehen. Vorzugsweise wird ein lokales Drehzahlminimum erkannt, wenn festgestellt wird, dass unmittelbar vor und nach diesem Drehzahlminimum die Drehzahl dieser Abtriebwelle höher ist, als an diesem lokalen Drehzahlminimum. Vorzugsweise bei Vorliegen einer mathematischen Beschreibung des Drehzahlverlaufs kann dieses lokale Drehzahlminimum durch Bilden und Untersuchen der 1. Ableitung dieser mathematischen Beschreibung dieses Drehzahlverlaufs gefunden werden.

Unter dem Erfassen eines lokalen Drehzahlmaximums ist die Bewertung der gemessenen Drehzahl dieser Abtriebwelle zu verstehen. Vorzugsweise wird ein lokales Drehzahlmaximum erkannt, wenn festgestellt wird, dass unmittelbar vor und nach diesem Drehzahlmaximum die Drehzahl dieser Abtriebwelle geringer ist als an diesem lokalen Drehzahlmaximum. Vorzugsweise bei Vorliegen einer mathematischen Beschreibung des Drehzahlverlaufs kann dieses lokale Drehzahlmaximum durch Bilden und Untersuchen der 1. Ableitung dieser mathematischen Beschreibung dieses Drehzahlverlaufs gefunden werden.

Im Sinne der Erfindung sind unter lokalen Drehzahlgrößen wenigstens die lokalen Drehzahlminima und -maxima zu verstehen.

Unter dem Auswerten dieser lokalen Drehzahlgrößen ist im Sinne der Erfindung zu verstehen, dass aus diesem lokalen Drehzahlminimum und diesem lokalen Drehzahlmaximum eine lokale Amplitude, insbesondere durch Differenzbildung, bestimmt wird. Es wird aus einer Abfolge von wenigstens einem Drehzahlminimum und einem Drehzahlmaximum eine lokale Frequenz abgeleitet. Weiter vorzugsweise liegen diese lokale Amplitude und Frequenz während eines lokalen Schwingungszeitraums vor.

Unter dem direkten bzw. indirekten Bestimmen der Dauer eines lokalen Schwingungs-Zeitraums ist im Sinne der Erfindung zu verstehen, dass die Dauer bestimmt wird, innerhalb welcher eine Schwingung mit im Wesentlichen gleicher lokaler Frequenz und Amplitude vorliegt. Vorzugsweise sind die Amplitude und Frequenz einer Schwingung solange als im Wesentlichen gleich anzusehen, solange diese einen vorgebaren Schwingungs-Toleranzbereich nicht verlassen. Weiter vorzugsweise ist unter einem Schwingungs-Toleranzbereich ein Bereich zu verstehen, welcher vorzugsweise durch zwei Toleranz-Schwellenwert begrenzt wird. Vorzugsweise sind diese Schwellenwerte für Amplitude und Frequenz unabhängig vorgebbar. Vorzugsweise wird dieser Toleranzbereich auf eine Toleranzbasis bezogen, wobei diese auf wenigstens eine der lokalen Drehzahlgrößen bezogen ist, welche von diesem Toleranzbereich betroffen ist. Die Toleranzbasis ist auf die erste ermittelte lokale Amplitude/Frequenz eines lokalen Schwingungsmusters bezogen. Gemäß der Erfindung ist eine dieser Schwingungen als im Wesentlichen gleich aufzufassen, wenn die lokale Drehzahlgröße keinen dieser Schwellenwert überschreitet und einer dieser Schwellenwerte, bezogen auf die Toleranzbasis, 25%, bevorzugt 10% und besonders bevorzugt 3% größer ist als diese und ein weiterer dieser Schwellenwerte 25%, bevorzugt 10% und besonders bevorzugt 3% geringer ist als diese.

Unter dem direkten Bestimmen der Dauer dieses Schwingungszeitraums ist im Sinne der Erfindung zu verstehen, dass die Dauer dieses Schwingungszeitraums mittels einer Zeitmessung bestimmt wird.

Unter dem indirekten Bestimmen der Dauer dieses Schwingungszeitraums ist im Sinne der Erfindung zu verstehen, dass wenigstens die Anzahl der auftretenden Drehzahlschwingungen erfasst wird, vorzugsweise wird hierzu die Anzahl der auftretenden lokalen Drehzahlminima oder lokalen Drehzahlmaxima, bevorzugt der auftretenden lokalen Drehzahlminima und -maxima herangezogen.

Unter dem Beschreiben eines lokalen Schwingungsmusters ist im Sinne der Erfindung zu verstehen, dass wenigstens die Dauer des Schwingungszeitraums, wenigstens die innerhalb dieses vorliegende Frequenz und wenigstens die innerhalb dieses vorliegende Amplitude gespeichert oder für die weitere Nutzung zur Verfügung gestellt wird. Vorzugsweise sind die gespeicherten Daten so ausgewählt, dass durch diese die aufgetretene Schwingung beschreibbar ist.

Unter einem Drehzahl-Schwellenwert ist im Sinne der Erfindung ein vorbestimmbarer oder veränderbarer Drehzahlwert, vorzugsweise für die Abtriebswelle beziehungsweise die Drehschwingungs-Beeinflussungs-Einrichtung, zu verstehen. Vorzugsweise ist dieser Drehzahl-Schwellenwert so gewählt, dass unterhalb dieses Drehzahl-Schwellenwertes kritische Drehzahlsituationen auftreten können. Vorzugsweise ist der Drehzahl-Schellenwert so gewählt, dass oberhalb dieses Wertes im Wesentlichen keine Beschädigungen der Drehschwingungs-Beeinflussungs-Einrichtung zu erwarten sind.

Mittels eines erfindungsgemäßen Verfahrens kann somit vorzugsweise eine Datenbasis für den Vergleich von aufgetretenen Schwingungsmustern mit vordefinierten Vergleichs-Schwingungsmuster angelegt werden.

Nachfolgend werden zu bevorzugende Weiterbildungen der Erfindung beschrieben.

In einer bevorzugten Ausführungsform wird die gemessene Ist-Drehzahl mit einem vorgebbaren Drehzahl-Schwellenwert verglichen. Dieser Drehzahl-Schwellenwert ist vorzugsweise abhängig von der lokalen Frequenz oder von der lokalen Amplitude der gemessenen Drehzahlschwankung. In einer besonders bevorzugten Ausführungsform weist wenigstens eine Einrichtung dieser Antriebsvorrichtung, insbesondere die Drehschwingungs-Beeinflussungs-Einrichtung, ein mit der Drehzahl veränderbares Drehschwingungsverhalten auf, insbesondere mit der Drehzahl veränderbare Eigenfrequenzen. Dabei ist dieser Drehzahl-Schwellenwerte vorzugsweise so ausgewählt, dass unterhalb dieses Drehzahl-Schwellenwertes keine kritischen Drehzahlsituationen zu erwarten sind. Vorzugsweise ist eine solche kritische Drehzahlsituation dann nicht zu erwarten, wenn diese Antriebsvorrichtung oder wenigstens eine Einrichtung dieser Antriebsvorrichtung, im Wesentlichen nicht mit einer ihrer Eigenfrequenzen zum Schwingen angeregt wird. Insbesondere durch einen von Frequenz oder Amplitude oder von beidem abhängigen Drehzahl-Schwellenwert, ist eine besonders exakte Erkennung der relevanten Schwingungsmuster ermöglicht und damit ein verbessertes Verfahren zum Erkennen dieser erreichbar.

Ein solches Unterschreiten dieses Drehzahl-Schwellenwertes kann insbesondere für Betriebssituationen auftreten, in welchen die Drehzahl der Verbrennungskraftmaschine durch ein entsprechendes Bedienungs- beziehungsweise Fahrverhalten insbesondere des Fahrers unter die Leerlaufdrehzahl des Verbrennungsmotors gebracht wird. Solche Situationen können auftreten, wenn das Fahrzeug bei eingelegtem Gang während der Fahrt durch Bremsen beziehungsweise im Stillstand durch entsprechende Betätigung der Kupplung gewürgt wird. Ferner kann eine solche Situation beim Starten der Verbrennungskraftmaschine auftreten, wenn ein Zündanlassschalter nur kurzzeitig betätigt wird. Nicht zuletzt kann es zu einem solchen Unterschreiten des Drehzahl-Schwellenwertes kommen, wenn bei Fahrzeugen mit manuellen Schaltgetrieben während der Fahrt ein Verschalten in einen zu hohen Gang erfolgt.

In einer bevorzugten Ausführungsform wird bei Änderung eines dieser lokalen Drehzahlkennwerte, vorzugsweise wenigstens der lokalen Frequenz oder lokalen Amplitude, über einen Schwingung-Toleranzwert hinaus, ein weiteres dieser lokalen Schwingungsmuster ermittelt. Vorzugsweise wird durch die Erfassung mehrerer lokaler Schwingungsmuster eine besonders exakte Erfassung der real vorliegenden Schwingungen erreicht. Insbesondere durch die Abfolge und Beschreibung mehrerer lokaler Schwingungsmuster wird eine exakte Erfassung der vorliegenden Drehzahl-/Drehmomentschwankungen erreicht und damit ein verbessertes Verfahren zur Verfügung gestellt.

In einer bevorzugten Ausführungsform weist ein lokales Schwingungsmuster wenigstens die Daten auf:
- lokale Amplitude,
- lokale Frequenz,
- lokaler Schwingung-Zeitraum,
- lokale Äquivalenzdrehzahl.

Es ist unter der lokalen Äquivalenzdrehzahl ein Kennwert, insbesondere für die Drehzahl der Drehschwingungs-Beeinflussungs-Einrichtung, zu verstehen, welcher die Drehzahl, insbesondere dieser Einrichtung, innerhalb des Schwingungs-Zeitraums charakterisiert. Vorzugsweise ist unter dieser lokalen Äquivalenzdrehzahl der Mittelwert der Drehzahl der Drehschwingungs-Beeinflussungs-Einrichtung innerhalb dieses Schwingungs-Zeitraums zu verstehen. Vorzugsweise ist ein solcher Drehzahlmittelwert ein arithmetischer Mittelwert, ein geometrischer Mittelwert, ein harmonischer Mittelwert, ein quadratischer Mittelwert oder dergleichen. Insbesondere durch die Aufnahme der genannten Größen zur Beschreibung eines lokalen Schwingungsmusters wird eine hinreichend genaue Beschreibung dieses Musters ermöglicht und damit ein verbessertes Verfahren bereitgestellt.

In einer bevorzugten Ausführungsform weist dieses lokale Schwingungsmuster neben den vorgenannten Daten zusätzlich oder alternativ auch die Anzahl der innerhalb des lokalen Schwingung-Zeitraums aufgetretenen Schwingungen auf. Insbesondere die Anzahl der innerhalb des Schwingungszeitraums aufgetretenen Schwingungen ist zur Beschreibung einer lokalen Drehzahlschwingung von Bedeutung, durch die Erfassung dieser Anzahl wird ein verbessertes Verfahren ermöglicht.

In einer bevorzugten Ausführungsform wird bei Überschreiten eines Schwingungs-Zeitraums-Schwellenwertes oder bei Überschreiten einer vorgegebenen Anzahl von Schwingungen aus wenigstens einem, vorzugsweise aus mehreren dieser lokalen Schwingungsmustern, ein globales Schwingungsmuster gebildet.

Vorzugsweise wird dieses globale Schwingungsmuster durch eine Kombination von mehreren lokalen Schwingungsmustern gebildet. Insbesondere durch die Kombination von mehreren lokalen Schwingungsmustern, welche insbesondere unterschiedliche lokale Drehzahlkennwerte aufweisen, zu einem globalen Schwingungsmuster wird eine besonders exakte Beschreibung der aufgetretenen Drehzahl-/Drehmomentschwankungen ermöglicht und somit ein verbessertes Verfahren bereitgestellt.

Es wird dieses globale Schwingungsmuster, oder wenigstens ein lokales Schwingungsmuster, mit vorgegebenen Vergleichs-Schwingungsmustern verglichen. Weiter wird durch diesen Vergleich vorzugsweise eine Kategorisierung dieses Schwingungsmusters ermöglicht. Vorzugswiese erfolgt diese Kategorisierung wenigstens anhand von zwei unterschiedlichen Kategorien, wobei bei Zuordnung zu einer ersten Kategorie Steuerbefehle zur Änderung der Drehzahl wenigstens dieser Drehschwingungs-Beeinflussungs-Einrichtung vorgeschlagen werden, und bei Zuordnung zu einer zweiten Kategorie keine solche Steuerbefehle vorgeschlagen werden.

Dabei basiert vorzugsweise wenigstens eine der Kategorien für diese Kategorisierung auf einer Modellbildung für diese Antriebsvorrichtung. Vorzugsweise weist eine solche Modellbildung eine Drehschwingungsanalyse dieser Antriebsvorrichtung auf, vorzugsweise weist diese Drehschwingungsanalyse die Ermittelung wenigstens einer Eigenfrequenz wenigstens einer Einrichtung dieser Antriebsvorrichtung, vorzugsweise der Drehschwingungs-Beeinflussungs-Einrichtung auf. Weiter vorzugsweise beruht eine solche Modellbildung auf der Berechnung von Drehmassen und Drehsteifigkeiten, bevorzugt mittels analytischer Rechenmodelle oder besonders bevorzugt mittels eines Rechenmodells auf Basis Finiter-Elemente. Weiter vorzugsweise beruht eine solche Modellbildung auf experimentellen Untersuchungen dieser Antriebsvorrichtung, vorzugsweise auf Versuchen zum Eigenfrequenzverhalten dieser Antriebsvorrichtung oder einzelner Einrichtungen, insbesondere der Drehschwingungs-Beeinflussungs-Einrichtung. Insbesondere durch die Zuordnung der erfassten Schwingungsmuster zu vorgegebenen Vergleichs-Schwingungsmustern, welche vorzugsweise auf die Antriebsvorrichtung abgestimmt sind, wird eine einfache Möglichkeit zur Beurteilung der aufgetretenen Drehzahl-/Drehmomentschwankungen ermöglicht und somit ein verbessertes Verfahren zur Verfügung gestellt.

In einer bevorzugten Ausführungsform ist diese Kategorisierung, insbesondere die Auswahl der Vergleichs-Schwingungsmuster, wenigstens von einer, vorzugsweise von mehreren, bevorzugt von allen lokalen Äquivalenzdrehzahl abhängig. Weiter vorzugsweise ist die Auswahl dieser Vergleichs-Schwingungsmuster wenigstens von einer der Ist-Drehzahlen innerhalb dieses Schwingungs-Zeitraums abhängig. Insbesondere durch die drehzahlabhängige Auswahl von Vergleichs-Schwingungsmustern ist eine verbesserte Beurteilung der auftretenden Drehzahl-/Drehmomentschwankungen und damit insbesondere eine verbesserte Steuerung der Antriebsvorrichtung ermöglicht und somit wird ein verbessertes Verfahren zur Verfügung gestellt.

In einer bevorzugten Ausführungsform wird in Abhängigkeit der Zuordnung dieses Schwingungsmusters zu einem dieser Vergleichs-Schwingungsmuster ein Steuerbefehle für diese Antriebsvorrichtung erstellt. Vorzugsweise führt dieser Steuerbefehl zu einer Veränderung der Drehzahl dieser Drehschwingungs-Beeinflussungs-Einrichtung. Weiter vorzugsweise wird diese Drehzahländerung dieser Drehschwingungs-Beeinflussungs-Einrichtung mittels einer Drehzahländerung der Verbrennungskraftmaschine erreicht. Vorzugsweise wird diese Drehzahländerung insbesondere durch eine Drehzahlerhöhung der Verbrennungskraftmaschine bevorzugt durch eine Verringerung der Drehzahl der Verbrennungskraftmaschine erreicht. Insbesondere durch das Erstellen eines Steuerbefehls für diese Antriebsvorrichtung wird nicht nur ein Schwingungsmuster erfasst, sondern auch eine direkte Reaktion auf das erkannte Schwingungsmuster erstellt und damit ein verbessertes Verfahren zur Verfügung gestellt.

Weitere Vorteile, Merkmale und Anwendungsmöglichkeiten der vorliegenden Erfindung ergeben sich aus der nachfolgenden Beschreibung in Zusammenhang mit den Figuren.

Es zeigt:
- Fig.1:: einen beispielhaften Antriebsstrang eines Kraftfahrzeugs,
- Fig.2:: den beispielhaften Verlauf der Drehzahl n der Antriebwelle/Drehschwingungs-Beeinflussungs-Einrichtung aufgetragen über der Zeit t,
- Fig.3:: unterschiedliche, beispielhafte Schwingungsmuster,
- Fig.4:: ein Beispiel eines ermittelten Drehzahlverlaufs n der Abtriebswelle aufgetragen über der Zeit t.

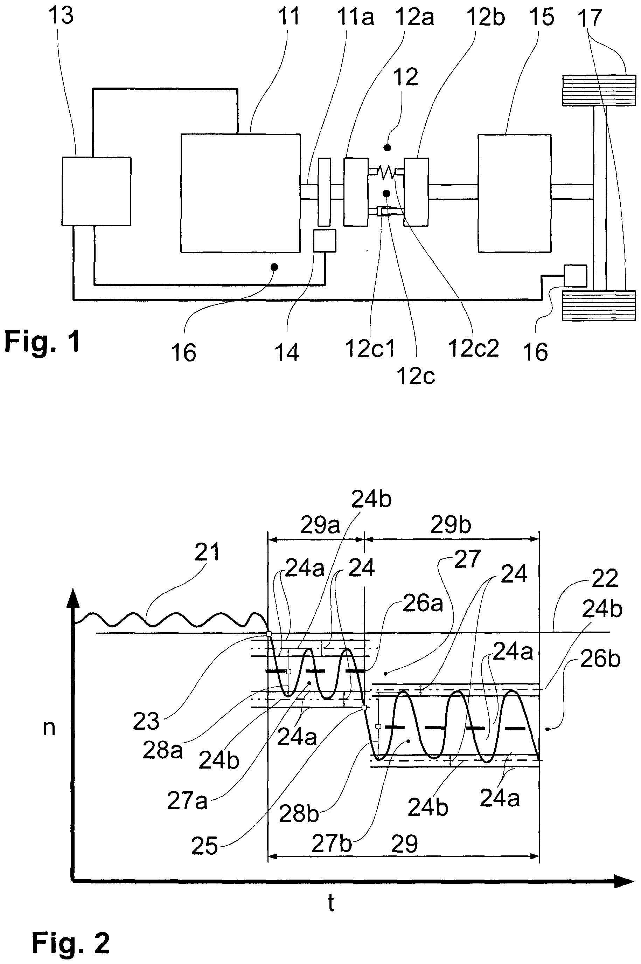

Fig.1 zeigt einen beispielhaften Antriebsstrang 18 eines Kraftfahrzeugs. Die Verbrennungskraftmaschine 11 leitet über ihre Abtriebwelle 11a ein Abtriebdrehmoment sowie eine Antriebsdrehzahl in ein Zweimassenschwungrad 12 ein. Dabei weist dieses Zweimassenschwungrad 12 eine Eingangsseite 12a und eine Ausgangsseite 12b auf, wobei diese beiden Seiten (12a, 12b) jeweils eine Drehmasse darstellen. Diese Eingangsseite 12a und diese Ausgangsseite 12b sind in einem vorgegebenen Winkelbereich gegeneinander drehbeweglich gelagert. Weiter sind diese Eingangsseite 12a und diese Ausgangsseite 12b mittels einer Verbindungseinrichtung 12c miteinander gekoppelt. Diese Verbindungseinrichtung 12c weist ein Dämpferelement 12c1 sowie ein Federelement 12c2 auf. Drehzahlschwingungen von dieser Abtriebwelle 11a werden einerseits durch die Dämpfungseinrichtung 12c1 gedämpft und andererseits wird durch ein schwingungsfähiges Zwei-Massensystem eine Gegenschwingung aufgebracht und somit die Amplitude von Drehzahlschwingungen verringert. Dabei wird dieses schwingungsfähige Zwei-Massensystem von der Eingangsseite 12a und der Ausgangsseite 12b gebildet, wobei diese insbesondere mittels des Federelements 12c2 verbunden sind. Von der Ausgangsseite des Zweimassenschwungrades 12b wird das Drehmoment und die Drehzahl zu einer Getriebeeinrichtung 15 übertragen. Die Steuerung dieser Verbrennungskraftmaschine 11 erfolgt mittels des elektronischen Steuergerätes 13, dabei kann von diesem elektronischen Steuergerät 13 das erfindungsgemäße Verfahren ausgeführt werden. Drehzahlinformationen nimmt dieses elektronische Steuergerät 13 mittels eines Drehzahlsensors 14 auf. Weiter wird die Fahrgeschwindigkeit des Kraftfahrzeugs mittels der Geschwindigkeitsmess-Einrichtung 16 erfasst und diese Information dem elektronischen Steuergerät 13 zugeführt. Die Geschwindigkeitsmess-Einrichtung 16 erfasst dabei die Drehzahl der Rad-Reifen-Kombination 17 direkt oder indirekt, hieraus lässt sich die Information der Fahrgeschwindigkeit des Kraftfahrzeugs ableiten.

Figur 2 zeigt den beispielhaften Verlauf der Drehzahl n der Abtriebwelle 11 a (nicht dargestellt) über der Zeit t. Dieser zeitliche Verlauf 21 wird mit einem Drehzahl-Schwellenwert 22 verglichen. Unterschreitet die Drehzahl n diesem Drehzahl-Schwellenwert 22 wird ab dem Zeitpunkt 23 eine kritische Drehzahlsituation erkannt, und das erfindungsgemäße Verfahren beginnt damit den weiteren zeitlichen Verlauf der Drehzahl n zu analysieren. Ein solcher Abfall der Drehzahl n unter den Drehzahl-Schwellenwert 22 kann sich durch eine falsche Anwahl einer Gangstufe einer Getriebeeinrichtung (nicht dargestellt) oder durch Probleme, wie sie sich während des Startvorgangs der Verbrennungskraftmaschine, insbesondere durch kurz aufeinander folgendes Abstellen und wieder Anlassen der Verbrennungskraftmaschine, beziehungsweise durch zu kurzes betätigen einer Anlassereinrichtung ergeben. Solange die lokalen Drehzahlwerte innerhalb vorgegebener Toleranzwerte 24 liegen, hier innerhalb von Toleranzwerten für die Drehzahl (Amplitude). Tritt die Ist-Drehzahl, hier zum Zeitpunkt 25 über einen dieser Toleranzwerte 24 hinaus, so wird mit der Erkennung eines weiteren lokalen Schwingungsmusters begonnen. Innerhalb eines lokalen Schwingungszeitraums 29a, 29b liegt im Wesentlichen eine konstante lokale Amplitude und Frequenz vor. Liegen die Schwankungen dieser Drehzahl über einen vorgegebenen Zeitraum den sogenannten Schwingungszeitraum 29 vor, so wird aus den Daten ein globales Schwingungsmuster 27 aus den lokalen Schwingungsmustern 27a, 27b aufgebaut. Ein lokales Schwingungsmuster ist durch seine lokale Frequenz (nicht dargestellt), durch seine lokale Amplitude 28a, 28b sowie durch eine lokalen Drehzahlkennwert 26a, 26b gekennzeichnet.

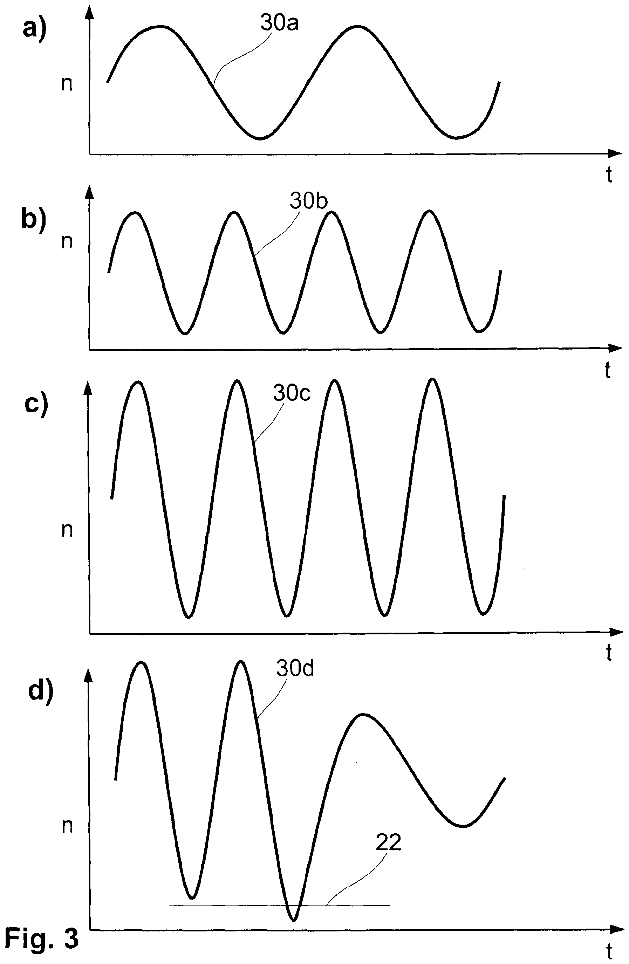

Figur 3 zeigt unterschiedliche, beispielhafte Schwingungsmuster, dargestellt im Zeitbereich. Dabei sind in den Figuren 3a bis 3d jeweils die Drehzahlschwankungen 30a bis 30d, Amplitude der Drehzahl n, über der Zeit t dargestellt. Figur 3a zeigt ein Muster einer Drehzahlschwankung 30a mit geringer Frequenz und geringer Amplitude. Solche niederfrequenten Schwankungen können insbesondere im Bereich von geringen Antriebsdrehzahlen auftreten und, soweit sie im Bereich einer Eigenfrequenz, insbesondere des Zweimassenschwungrades liegen, zu einer Beschädigung desselben frühen.
Figur 3b zeigt ein Muster einer Drehzahlschwankung 30b mit gegenüber Figur 3a vergrößerter Frequenz und gleicher Amplitude. Solche höher frequenten Schwankungen können, insbesondere im Bereich von gegenüber Figur 3a erhöhten Antriebsdrehzahlen auftreten und soweit sie im Bereich einer Eigenfrequenz, insbesondere des Zweimassenschwungrades liegen zu einer Beschädigung desselben führen. Zweimassenschwungräder weisen häufig ein von ihrer Drehzahl abhängiges Eigenfrequenzverhalten aufweisen.
Figur 3c zeigt ein Muster einer Drehzahlschwankung 30c mit gegenüber Figur 3b vergrößerter Amplitude. Solche verstärkten Schwankungen, sind in der Regel bei ansonsten gleichen Betriebsbedingungen der Antriebsvorrichtung kritischer zu bewerten als Schwankungen mit geringerer Amplitude.
Figur 3d zeigt ein Muster einer Drehzahlschwankung 30d, welches sich aus einem hochfrequenten Teil mit großer Amplitude und einem niederfrequenten Teil mit geringer Amplitude aufweist. Bestimmte Abfolgen können, in Abhängigkeit von den Eigenheiten der jeweiligen Antriebsvorrichtung zu kritischen Anregungen dieser Antriebsvorrichtung führen. Weiter ist in Figur 3d erkennbar, dass das dargestellte Muster 30d den Drehzahl-Schwellenwert 22 unterschreitet. Auch solche singulär auftretenden Ereignisse können die Kategorisierung eines dieser Muster der Drehzahlschwankungen beeinflussen.

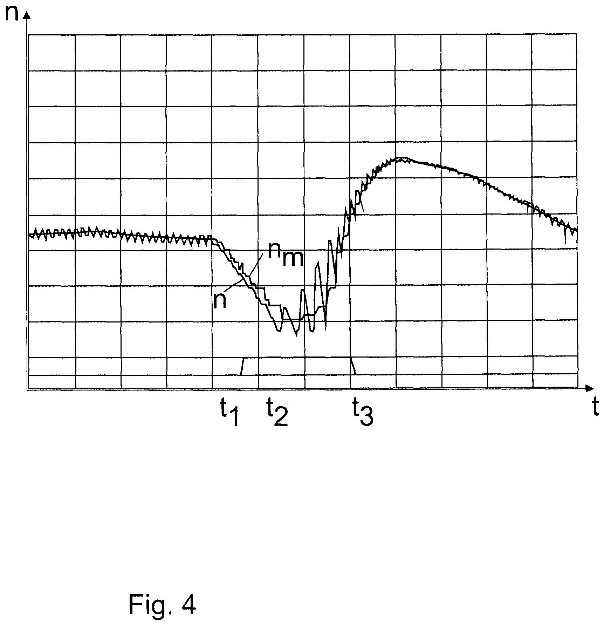

Figur 4 zeigt ein Beispiel für einen ermittelten Verlauf der Drehzahl n der Verbrennungskraftmaschine 11 über der Zeit t. Wie dem dargestellten zeitlichen Verlauf zu entnehmen ist, ist die Drehzahl n bis zum Zeitpunkt t₁ im Wesentlichen konstant und zeigt nur geringfügige Schwankungen in Form von kleineren, regelmäßigen Oszillationen der Drehzahl n um den zeitlichen Verlauf einer mittleren Drehzahl nₘ.

Zwischen den Zeitpunkten t₁ und t₂ fällt die Drehzahl n kontinuierlich ab, bevor sie dann zwischen den Zeitpunkten t₂ und t₃ größeren Schwankungen unterliegt, welche im gezeigten zeitlichen Verlauf anhand deutlich ausgeprägter Schwingungen in Form von Ausschlägen nach oben und unten zu erkennen sind. Mit fortschreitender Zeit nehmen diese Schwingungen wieder ab, sodass nach dem Zeitpunkt t₃ die Drehzahl n lediglich Schwankungen zeigt, welche in Größe und Anzahl im Wesentlichen den Schwankungen zu Beginn des dargestellten Verlaufs entsprechen.

Ein solcher zeitlicher Verlauf der Drehzahl n kann beispielsweise bei Fahrzeugen mit einer sogenannten Start-Stopp-Automatik auftreten, wenn sich das Fahrzeug beispielsweise einer roten Ampel nähert, durch Bremsen zum Stillstand gebracht wird, in welchem der Fahrer den Gang herausnimmt und vom Kupplungspedal geht. In diesen Fall würde die Verbrennungskraftmaschine durch die Start-Stopp-Automatik nach kurzer Zeit von etwa 1 Sekunde automatisch abgestellt werden. Tritt der Fahrer jedoch während dieses Abstellvorgangs wieder auf das Kupplungspedal, um beispielsweise weiter zu fahren, weil die Ampel zwischenzeitlich auf grün gewechselt ist, wird die zwischenzeitlich unter die Leerlaufdrehzahl gesunkene Drehzahl wieder erhöht, wobei bis zur Erreichung oder Überschreitung der Leerlaufdrehzahl zwischen den Zeitpunkten t₂ und t₃ starke Drehzahlschwankungen aufgrund von Resonanzen auftreten können. Ähnliche Verläufe können sich auch ergeben, wenn die Drehzahl der Verbrennungskraftmaschine beispielsweise während der Fahrt durch Bremsen oder im Stillstand des Fahrzeugs durch eine entsprechende Betätigung der Kupplung gewürgt wird.

**Bezugszeichenliste:**

| | |
|---|---|
| 11 | Verbrennungskraftmaschine |
| 11a | Abtriebswelle |
| 12 | Zweimassen-Schwungrad (ZMS) |
| 12a | Eingangsseite ZMS |
| 12 b | Ausgangsseite ZMS |
| 12c | Verbindungs-Einrichtung ZMS |
| 12c1 | Dämpferelement |
| 12c2 | Federelement |
| 13 | Elektronisches Steuergerät |
| 14 | Drehzahlmess-Einrichtung |
| 15 | Getriebe-Einrichtu ng |
| 16 | Geschwindigkeitsmess-Einrichtung |
| 17 | Rad-Reifen-Kombination |
| 18 | Antriebsstrang |
| 21 | Zeitlicher Verlauf der Abtriebswellendrehzahl |
| 22 | Drehzahl-Schwellenwert |
| 23 | Erkennen einer kritischen Drehzahlsituation |
| 24 | Toleranzwerte/Toleranzbereich (Amplitude) |
| 24a | Toleranz-Schwelle nwert |
| 24b | Toleranzbasis |
| 25 | Überschreiten Toleranzbereich |
| 26a, 26b | Lokale Drehzahlkennwert (Mittelwert) |
| 27 | Globales Schwingungsmuster |
| 27a, 27b | Lokales Schwingungsmuster |
| 28a, 28b | Lokale Amplitude |
| 29 | Schwingungszeitraum |
| 29a, 29b | Lokaler Schwingungszeitraum |
| 30a bis 30d | Muster von Drehzahlschwankungen |

## Patentansprüche

1. Verfahren zum Erkennen einer Abfolge von Drehzahl- /Drehmomentschwankungen einer Antriebsvorrichtung,
wobei diese Antriebsvorrichtung wenigstens eine Verbrennungskraftmaschine und eine Drehschwingungs-Beeinflussungs-Einrichtung aufweist,
wobei
zur Erkennung von Drehzahl-/Drehmomentschwankungen die Ist-Drehzahl dieser Drehschwingungs-Beeinflussungs-Einrichtung ermittelt wird, und wobei
- ein lokales Drehzahlminimum und ein lokales Drehzahlmaximum erfasst werden, und wobei
- das lokale Drehzahlminimum und das lokale Drehzahlmaximum unter Bildung einer lokalen Amplitude und einer lokalen Frequenz als lokale Drehzahlkennwerte, ausgewertet werden,
**gekennzeichnet durch folgende Verfahrensschritte:**
- Bestimmen der Dauer eines lokalen Schwingungs-Zeitraums, wobei sich innerhalb dieses Zeitraums die lokalen Drehzahlkennwerte in einem Schwingungs-Toleranzbereich befinden, wobei dieser Schwingungs-Toleranzbereich auf eine Toleranzbasis bezogen ist, wobei diese Toleranzbasis auf die erste ermittelte lokale Amplitude / Frequenz eines lokalen Schwingungsmusters bezogen ist, wobei der Schwingungs-Toleranzbereich ein Bereich ist, welcher durch zwei Toleranz-Schwellenwerte begrenzt wird, wobei einer dieser Schwellenwerte, bezogen auf die Toleranzbasis, 25%, bevorzugt 10% und besonders bevorzugt 3% größer ist als diese und der weitere dieser Schwellenwerte 25%, bevorzugt 10% und besonders bevorzugt 3% geringer ist als diese,
- Beschreiben eines lokalen Schwingungsmusters, welches die Dauer des lokalen Schwingungs-Zeitraums, die lokale Amplitude und die lokale Frequenz aufweist, und
- Vergleichen des lokalen Schwingungsmusters mit vorgegebenen Vergleichs-Schwingungsmustern, wobei durch dieses Vergleichen eine Kategorisierung dieses Schwingungsmusters ermöglicht ist.

2. Verfahren nach Anspruch 1, **dadurch gekennzeichnet, dass** diese lokalen Schwingungsmuster dann erkannt werden, wenn eine kritische Drehzahlsituation vorliegt, wobei zum Erkennen dieser Situation ein Vergleich der ermittelten Ist-Drehzahl mit einem vorgebbaren Drehzahlschwellenwert durchgeführt wird, wobei beim Unterschreiten dieses Schwellenwertes eine kritische Drehzahlsituation vorliegt.

3. Verfahren nach Anspruch 2, **dadurch gekennzeichnet, dass** dieser Drehzahl-Schwellenwert von einem dieser lokalen Drehzahlkennwerte abhängig ist.

4. Verfahren nach einem der vorhergehenden Ansprüche, **dadurch gekennzeichnet, dass** bei Änderung wenigstens eines der lokalen Drehzahlkennwerte über den Schwingungs-Toleranzbereich hinaus, ein weiteres dieser lokalen Schwingungsmuster ermittelt wird.

5. Verfahren nach einem der vorhergehenden Ansprüche, **dadurch gekennzeichnet, dass** das lokale Schwingungsmuster wenigstens die folgenden Daten aufweist:
- lokale Amplitude
- lokale Frequenz
- Dauer des lokalen Schwingungs-Zeitraums
- lokale Äquivalenzdrehzahl, wobei diese einen Kennwert für die Drehzahl der Drehschwingungs-Beeinflussungs-Einrichtung für diesen Schwingungs-Zeitraum darstellt, vorzugsweise ein Mittelwert dieser Drehzahl für diesen Zeitraum ist.

6. Verfahren nach Anspruch 5, **dadurch gekennzeichnet, dass** eines dieser lokalen Schwingungsmusters die Anzahl der innerhalb des lokalen Schwingungs-Zeitraums aufgetretenen Schwingungen enthält.

7. Verfahren nach einem der vorhergehenden Ansprüche, **dadurch gekennzeichnet, dass**
bei Überschreiten eines Schwingungs-Zeitraums-Schwellenwertes oder bei Überschreiten einer vorgegebenen Anzahl von Schwingungen,
aus diesen lokalen Schwingungsmustern ein globales Schwingungsmuster gebildet wird, insbesondere durch eine Kombination von mehreren der lokalen Schwingungsmustern.

8. Verfahren nach einem der Ansprüche 5 oder 6, **dadurch gekennzeichnet, dass**
diese Kategorisierung, insbesondere die Auswahl der Vergleichs-Schwingungsmuster, wenigstens von einer, vorzugsweise von mehreren lokalen Äquivalenzdrehzahlen abhängig ist oder von einer der Ist-Drehzahlen innerhalb dieses Schwingungs-Zeitraums.

9. Verfahren nach einem der vorhergehenden Ansprüche, **dadurch gekennzeichnet, dass**
abhängig von der Zuordnung des Schwingungsmusters zu einem dieser Vergleichs-Schwingungsmuster ein Steuerbefehl für diese Antriebsvorrichtung generiert wird.

10. Verfahren nach Anspruch 9, **dadurch gekennzeichnet, dass**
dieser Steuerbefehl zur Veränderung der Drehzahl dieser Drehschwingungs-Beeinflussungs-Einrichtung führt, vorzugsweise mittels einer Drehzahländerung der Verbrennungskraftmaschine.

## Claims

1. Method for detecting a sequence of rotational speed/torque fluctuations of a drive device, wherein the drive device comprises at least one internal combustion engine and a torsional oscillation influencing device, wherein for detection of rotational speed/torque fluctuations the actual rotational speed of the torsional oscillation influencing device is determined, and wherein
- a local rotational speed minimum and a local rotational speed maximum are detected, and wherein - the local rotational speed minimum and the local rotational speed maximum are evaluated under formation of a local amplitude and a local frequency as local rotational speed characteristic values,
**characterized by the following method steps:**
- determining the duration of a local oscillation period, wherein within this period the local rotational speed characteristic values are in an oscillation tolerance range, wherein this oscillation tolerance range is related to a tolerance basis, wherein this tolerance basis is related to the first determined local amplitude/frequency of a local oscillation pattern, wherein the oscillation tolerance range is a range which is limited by two tolerance threshold values, wherein one of these threshold values, related to the tolerance basis, is 25%, preferably 10% and more preferably 3% larger than this and the further one of these threshold values is 25%, preferably 10% and more preferably 3% smaller than this,
- describing a local oscillation pattern, which comprises the duration of the local oscillation period, the local amplitude and the local frequency, and
- comparing the local oscillation pattern with predetermined comparison oscillation patterns, wherein, by this comparison, a categorization of this oscillation pattern is facilitated.

2. Method according to claim 1, **characterized in that** these local oscillation patterns are detected when a critical rotational speed situation is present, wherein for detecting this situation, a comparison of the determined actual rotational speed with a predeterminable rotational speed threshold value is executed, wherein, when this threshold value is undershot, a critical rotational speed situation is present.

3. Method according to claim 2, **characterized in that** this rotational speed threshold value depends on one of these local rotational speed characteristic values.

4. Method according to one of the preceding claims, **characterized in that,** when at least one of the local rotational speed characteristic values changes beyond the oscillation tolerance range, a further one of these local oscillation patterns is determined.

5. Method according to one of the preceding claims, **characterized in that** the local oscillation pattern comprises at least the following data:
- local amplitude
- local frequency
- duration of the local oscillation period
- local equivalent rotational speed, wherein this represents a characteristic value for the rotational speed of the torsional oscillation influencing device for this oscillation period, preferably an average value of this rotational speed for this period.

6. Method according to claim 5, **characterized in that** one of these local oscillation patterns includes the number of oscillations that occurred within the local oscillation period.

7. Method according to one of the preceding claims, **characterized in that,** when an oscillation period threshold value is exceeded, or, when a predetermined number of oscillations is exceeded, a global oscillation pattern is formed from these local oscillation patterns, in particular by a combination of several of the local oscillation patterns.

8. Method according to one of the claims 5 or 6, **characterized in that** this categorization, in particular the selection of the comparative oscillation patterns, depends on at least one, preferably on several, local equivalent rotational speeds, or, on one of the actual rotational speeds within this oscillation period.

9. Method according to one of the preceding claims, **characterized in that** a control command for this drive device is generated depending on the assignment of the oscillation pattern to one of these comparative oscillation patterns.

10. Method according to claim 9, **characterized in that** this control command leads to a change in the rotational speed of this torsional oscillation influencing device, preferably by a change in the rotational speed of the internal combustion engine.

## Revendications

1. Procédé d'identification d'une séquence de fluctuations de vitesse de rotation/couple de rotation d'un dispositif d'entraînement,
dans lequel ledit dispositif d'entraînement présente au moins un moteur à combustion interne et un système ayant une incidence sur l'oscillation de rotation,
dans lequel
pour identifier des fluctuations de vitesse de rotation/de couple de rotation, la vitesse de rotation réelle dudit système ayant une incidence sur l'oscillation de rotation est déterminée, et dans lequel
- un minimum de vitesse de rotation local et un maximum de vitesse de rotation local sont détectés, et dans lequel
- le minimum de vitesse de rotation local et le maximum de vitesse de rotation local sont évalués en formant une amplitude locale et une fréquence locale en tant que valeurs caractéristiques locales de vitesse de rotation, **caractérisé par** des étapes de procédé suivantes :
- la définition de la durée d'un laps de temps d'oscillation local, dans lequel les valeurs caractéristiques locales de vitesse de rotation se situent dans une plage de tolérances d'oscillation dans ledit laps de temps, dans lequel ladite plage de tolérances d'oscillation se rapporte à une base de tolérance, dans lequel ladite base de tolérance se rapporte à la première amplitude/fréquence locale déterminée d'un modèle d'oscillation locale, dans lequel la plage de tolérances d'oscillation est une plage, laquelle est délimitée par deux valeurs de seuil de tolérance, dans lequel une desdites valeurs de seuil est supérieure, par rapport à la base de tolérance, de 25 %, de manière préférée de 10 % et de manière particulièrement préférée de 3 % à celle-ci et l'autre desdites valeurs de seuil est inférieure de 25 %, de manière préférée de 10 % et de manière particulièrement préférée de 3 % à celle-ci,
- la description d'un modèle d'oscillation local, lequel présente la durée du laps de temps d'oscillation local, l'amplitude locale et la fréquence locale, et
- la comparaison du modèle d'oscillation local à des modèles d'oscillation de comparaison spécifiés, dans lequel une catégorisation dudit modèle d'oscillation est rendue possible par ladite comparaison.

2. Procédé selon la revendication 1, **caractérisé en ce que** lesdits modèles d'oscillation locaux sont identifiés quand une situation de vitesse de rotation critique est présente, dans lequel pour identifier ladite situation, une comparaison de la vitesse de rotation réelle déterminée à une valeur de seuil de vitesse de rotation pouvant être spécifiée est réalisée, dans lequel lors du non-dépassement de ladite valeur de seuil, une situation de vitesse de rotation critique est présente.

3. Procédé selon la revendication 2, **caractérisé en ce que** ladite valeur de seuil de vitesse de rotation dépend d'une desdites valeurs caractéristiques de vitesse de rotation locales.

4. Procédé selon l'une quelconque des revendications précédentes, **caractérisé en ce que**
en cas de modification d'au moins une des valeurs caractéristiques de vitesse de rotation locales au-delà de la plage de tolérances d'oscillation, un autre desdits modèles d'oscillation locaux est déterminé.

5. Procédé selon l'une quelconque des revendications précédentes, **caractérisé en ce que**
le modèle d'oscillation local présente au moins les données suivantes :
- amplitude locale
- fréquence locale
- durée du laps de temps d'oscillation local,
- vitesse de rotation équivalente locale, dans lequel celle-ci constitue une valeur caractéristique de la vitesse de rotation du système ayant une incidence sur l'oscillation de rotation pour ledit laps de temps d'oscillation, de préférence est une valeur moyenne de ladite vitesse de rotation pour ledit laps de temps.

6. Procédé selon la revendication 5, **caractérisé en ce que** un desdits modèles d'oscillation locaux contient le nombre des oscillations apparues dans le laps de temps d'oscillation local.

7. Procédé selon l'une quelconque des revendications précédentes, **caractérisé en ce que**
lors du dépassement d'une valeur de seuil de laps de temps d'oscillation ou lors du dépassement d'un nombre spécifié d'oscillations,
un modèle d'oscillation global est obtenu à partir desdits modèles d'oscillation locaux, en particulier par une combinaison de plusieurs des modèles d'oscillation locaux.

8. Procédé selon l'une quelconque des revendications 5 ou 6,
**caractérisé en ce que**
ladite catégorisation, en particulier le choix des modèles d'oscillation de comparaison, dépend d'au moins une, de préférence de plusieurs vitesses de rotation équivalentes locales ou d'une des vitesses de rotation réelles dans ledit laps de temps d'oscillation.

9. Procédé selon l'une quelconque des revendications précédentes, **caractérisé en ce que**
en fonction de l'affectation du modèle d'oscillation à un desdits modèles d'oscillation de comparaison, une instruction de commande est générée pour ledit dispositif d'entraînement.

10. Procédé selon la revendication 9,
**caractérisé en ce que**
ladite instruction de commande conduit à la modification de la vitesse de rotation dudit système ayant une incidence sur l'oscillation de rotation, de préférence au moyen d'une modification de vitesse de rotation du moteur à combustion interne.
